Europäisches Patentamt

European Patent Office

Office européen des brevets

(19)

(11) Publication number: **0 064 859**
**B1**

(12) **EUROPEAN PATENT SPECIFICATION**

(45) Date of publication of patent specification: 30.07.86

(51) Int. Cl.⁴: **G 11 B 23/04**

(21) Application number: **82302286.8**

(22) Date of filing: **05.05.82**

(54) **Tape cassette.**

(30) Priority: **06.05.81 JP 66827/81**

(43) Date of publication of application:
**17.11.82 Bulletin 82/46**

(45) Publication of the grant of the patent:
**30.07.86 Bulletin 86/31**

(84) Designated Contracting States:
**AT DE FR GB NL**

(56) References cited:
**GB-A-2 044 733**
**JP-U-52 082 389**
**US-A-2 515 190**
**US-A-3 438 590**
**US-A-3 459 390**
**US-A-3 606 199**
**US-A-3 995 319**
**US-A-4 163 533**

(73) Proprietor: **SONY CORPORATION**
**7-35 Kitashinagawa 6-Chome Shinagawa-ku**
**Tokyo 141 (JP)**

(72) Inventor: **Saito, Kenzo**
**2-15-43 Nankoudai Izumi-shi**
**Miyagi-ken (JP)**

(74) Representative: **Thomas, Christopher Hugo**
**et al**
**D Young & Co 10 Staple Inn**
**London WC1V 7RD (GB)**

Courier Press, Leamington Spa, England.

## Description

This invention relates to a tape cassette.

Various types of magnetic tape recording and reproducing apparatus are well known, such as those of the video tape recorder (VTR) type. Because recorded video tape cassettes are expensive, it has recently become possible to hire recorded video tape cassettes which the user can reproduce on a domestic television receiver.

Generally, video tape cassettes are capable of being reproduced, rewound and then reproduced again. However, with hired video tape cassettes, it is desirable to provide for only a single viewing. In other words, it is desirable to prevent rewinding of the tape for repeated reproduction, so preventing early deterioration of the tape.

It is of course known to provide tape cassettes with lock means to prevent rotation of the reels when the tape cassette is not in use. See, for example, UK patent specification no. 2 044 733 A. Moreover, in one previously proposed video tape cassette, disclosed for example in Japanese utility model application no. 52/82389, movement of the suppy reel in the rewind direction is prevented by biasing a rotatable element into contact with a flange section of the supply reel. Generally, the flange section of the supply reel includes a number of recesses or teeth around the outer periphery of the reel. When the supply reel is rotated in the rewind direction, the rotatable element is strongly urged into contact with the flange section of the reel by a spring to prevent further movement thereof. During normal forward operation when the supply reel is rotated in the opposite direction, the rotatable element does not prevent rotation thereof. However, in this case, the rotatable element repeatedly hits against the teeth of the supply reel, thereby generating undesirable mechanical noise.

According to the present invention there is provided a tape cassette comprising:

a rotatable supply reel for supplying tape and having flange means;

a rotatable take-up reel for taking up said tape; and

lock means for preventing rotation of said supply reel and said take-up reel when said tape cassette is not in use;

characterised by:

further lock means for preventing rotation of said supply reel in a first direction to take up said tape;

a pivot; and

plate means secured to said further lock means and pivotally mounted on said pivot;

said plate means being in frictional engagement with said supply reel for pivotally moving said further lock means into locking contact with said flange means in response to rotation of said supply reel in said first direction to take up said tape and for pivotally moving said further lock means completely out of contact with said flange means in response to rotation of said supply reel in a second direction, opposite to said first direction, to supply said tape.

The invention will now be described by way of example with reference to the accompanying drawings, in which:

Figure 1 is a schematic plan view, partially broken away, of a previously proposed tape cassette with the upper half removed;

Figure 2 is a schematic plan view, partially broken away, of an embodiment of tape cassette according to the invention with the upper half removed;

Figure 3 is an enlarged perspective view of a reel lock mechanism of the tape cassette of Figure 2;

Figure 4A is an enlarged perspective view of a control member of the reel lock mechanism of Figure 3;

Figure 4B is a plan view of the control member of Figure 4A;

Figure 4C is an enlarged elevational view showing the control member of Figure 4A in the reel lock mechanism of Figure 3;

Figure 6A is an enlarged plan view of a release device of the reel lock mechanism of Figure 3;

Figure 6B is an elevational view of the release device of Figure 6A;

Figure 7 is an enlarged cross-sectional view of a portion of the tape cassette of Figure 2, illustrating the relation between the control member of Figure 4A and the supply reel;

Figure 8 is an enlarged plan view of the reel lock mechanism of Figure 3 during forward rotation of the supply reel;

Figure 9 is an enlarged plan view of the reel lock mechanism of Figure 3 during rewind rotation of the supply reel;

Figure 10 is an enlarged elevational view of a portion of the tape cassette housing of Figure 2, illustrating a lock release aperture;

Figure 11A is an enlarged plan view of a reel lock release tool for releasing the reel lock mechanism of Figure 3 to rewind the tape onto the supply reel; and

Figure 11B is an enlarged end view of the reel lock release tool of Figure 11A.

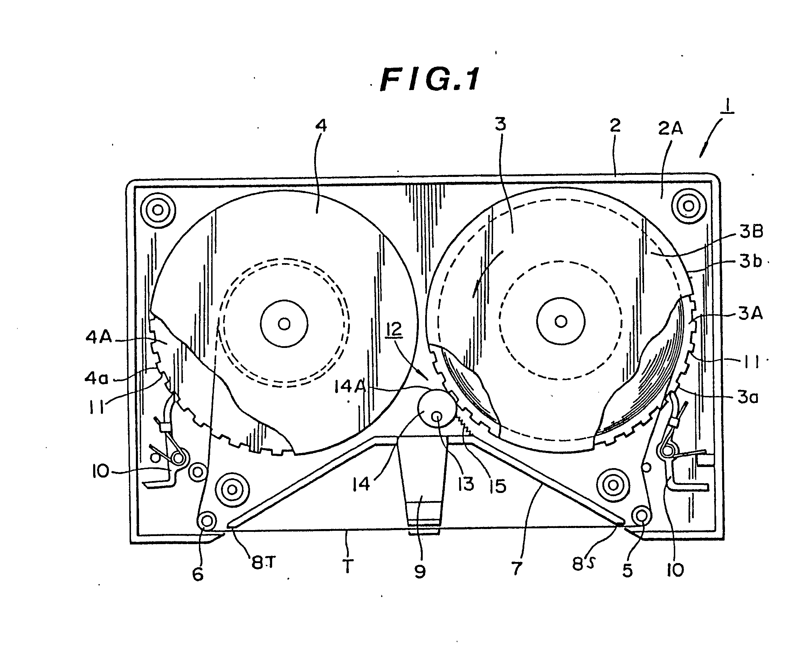

Referring to the drawings in detail, and initially to Figure 1, a previously proposed tape cassette 1, for example, a video tape cassette for a VIR, permits movement of the magnetic tape T therein only in the forward direction and prevents movement of the tape T in the rewind direction. In particular, a supply reel 3 and take-up reel 4 are rotatably positioned within the lower half 2A of a cassette housing 2 of the tape cassette 1, the cassette housing 2 including a front wall 7 formed in a substantially inverted V-shaped configuration. The tape T is wound about the supply reel 3 and the take-up reel 4 and extends therebetween and, in particular, the tape T extends from the supply reel 3, around a supply side guide roller 5, through a first opening 85 in the front wall 7 adjacent to the guide roller 5, through a second opening 8T in the opposite take-up side of the front wall 7, around a take-up side guide roller 6 and onto the take-up reel 4. An L-shaped tape position regulating element 9 is also provided and extends from the centre of the V-shaped configuration of the front wall 7 about the tape T to prevent sagging or looseness of the tape T where it extends between openings 8S and 8T.

The supply reel 3 and the take-up reel 4 each have respective lower reel flange sections 3A and 4A, respectively, which are formed along their respective peripheries 3a and 4a, respectively, with a plurality of recesses or teeth 11. Reel lock members 10 are provided on the supply and take-up sides and are arranged to engage with the teeth 11 of the reels 3 and 4 to prevent rotation when the tape cassette 1 is not in use. In this manner, sagging of the tape T is prevented when the tape cassette 1 is not in use. In particular, when the tape casette 1 is loaded into, for example, a VTR, a front cover (not shown) provided on the front wall 7 of the tape cassette 1 is opened, which results in the reel lock members 10 being disengaged from the teeth 11 of the reels 3 and 4. On the other hand, when the tape cassette 1 is removed from the VTR, the front cover is closed, whereby the reel lock members 10 are engaged with the teeth 11 to prevent rotation of the reels 3 and 4.

In order to prevent rotation of the supply reel 3 in the rewind direction, as shown by the arrow in Figure 1, the tape casette 1 includes a reel lock mechanism 12 disposed at an intermediate position between the supply reel 3 and the take-up reel 4 inside the cassette housing 2. In particular, the reel lock mechanism 12 includes a support pin 13 projecting perpendicularly from the bottom of the lower half 2A of the cassette housing 2, and an eccentric roller 14 rotatably mounted on the support pin 13. A coil spring 15 is also provided for biasing the roller 14 in the clockwise direction about the support pin 13, as viewed in Figure 1, such that the outer periphery 14A of the roller 14 is in contact with both outer peripheries 3a and 3b of the lower and upper flange sections 3A and 3B, respectively, of the supply reel 3.

When the supply reel 3 is rotated in the direction of the arrow in Figure 1, that is, in the rewind direction, the roller 14 is urged in the clockwise direction and is wedged against the outer peripheries 3a and 3b of the flange sections 3A and 3B, respectively, to prevent rotation of the supply reel 3. On the other hand, when the supply reel 3 is rotated in the normal forward direction, that is in a direction opposite to the arrow in Figure 1, the roller 14 is urged in the counterclockwise direction, while still in contact with the outer peripheries 3a and 3b of the flange sections 3A and 3B, respectively. In this manner, the reel lock mechanism 12 prevents movement of the tape T in the rewind direction, while permitting free movement of the tape T in the forward direction. However, during reproduction, the outer periphery 14a of the roller 14 continuously rolls over the outer peripheries 3a and 3b of the flange sections 3A and 3B, and therefore repeatedly bumps against the teeth 11 formed along the outer periphery 3a of the lower flange section 3A. As a result, undesirable mechanical noise, such as a clicking sound, is generated during reproduction.

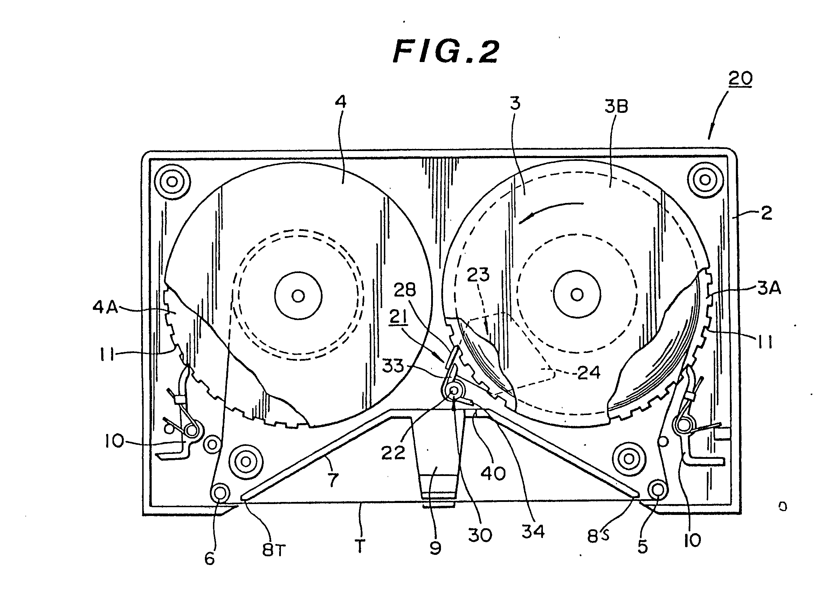

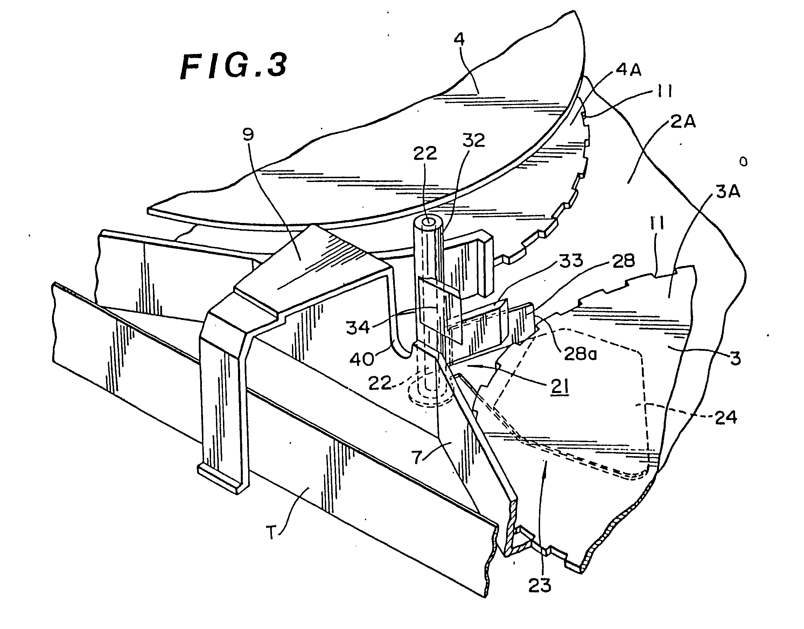

Referring now to Figures 2 and 3, an embodiment of tape cassette 20 will now be described, in which elements corresponding to those described above with reference to the tape cassette 1 of Figure 1 are identified by the same reference numerals and a detailed description thereof will be omitted for the sake of brevity. As shown therein, a reel lock mechanism 21 is provided in place of the reel lock mechanism 12 of Figure 1 for preventing rotation of the supply reel 3 in the rewind direction, shown by the arrow in Figure 2, while permitting rotation of the supply reel 3 in the normal forward direction. The reel lock mechanism 21 is disposed at an intermediate position between the supply reel 3 and the take-up reel 4 in the cassette housing 2 and includes a support pin 22 projecting perpendicularly from the bottom of the lower half 2A of the cassette housing 2, a rotatable control member 23 for preventing movement of the supply reel 3 in the direction of the arrow of Figure 2, while permitting movement thereof in the reverse direction, and a reel lock release device 30 for releasing the control member 23 from the supply reel 3 so as to permit rotation of the supply reel 3 in the rewind direction.

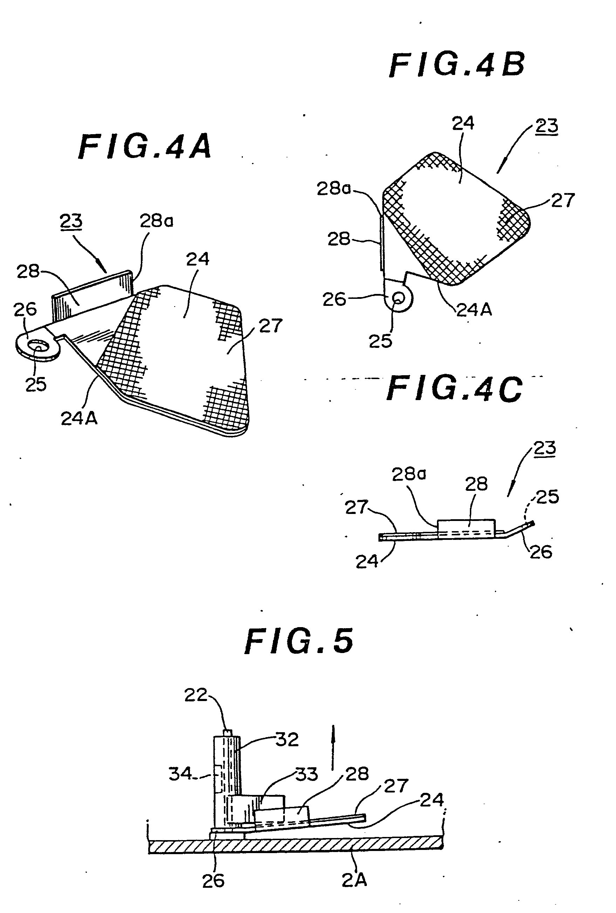

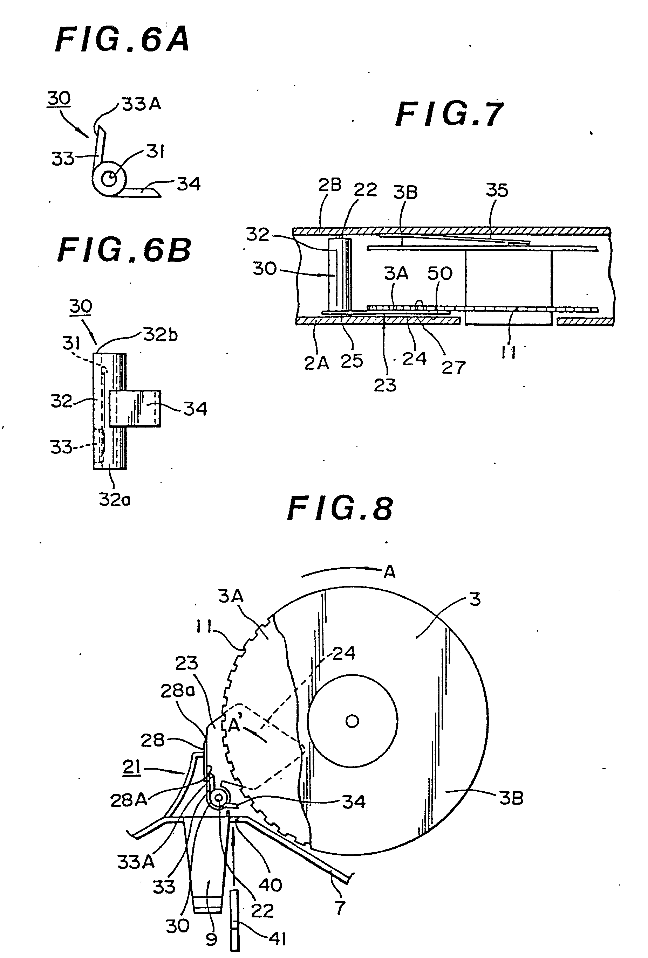

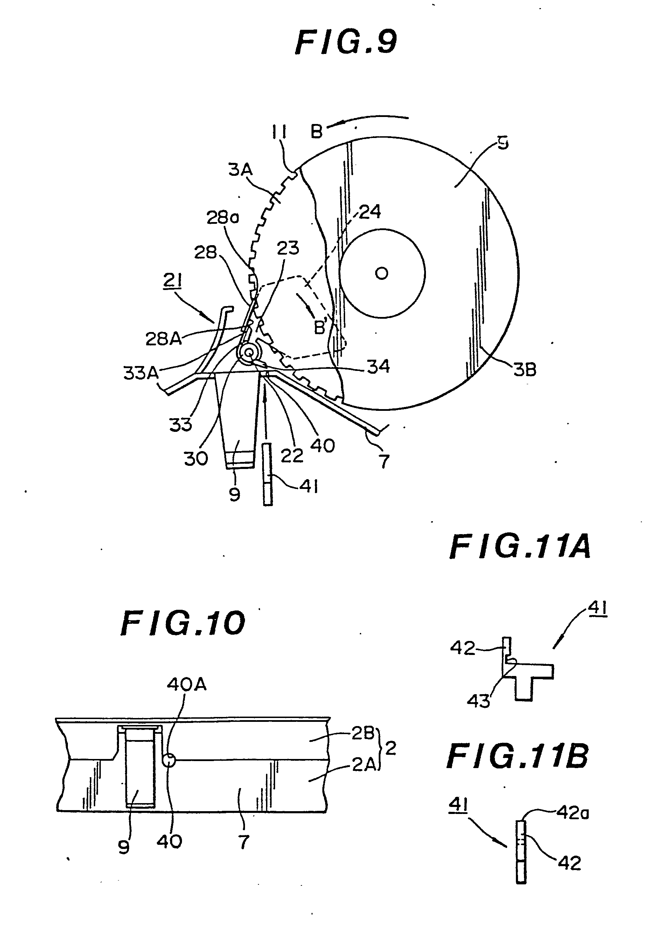

As shown more particularly in Figures 3, 4A to 4C, 5 and 7, the control member 23 includes a reel contacting plate 24 having a substantially parallelogram configuration and which, as will be discussed in greater detail hereinafter, is in a resiliently abutting relation with the underside 50 of the lower flange section 3A of the supply reel 3. In this regard, the upper surface 27 of the reel contacting plate 24 is preferably knurled or has a frictional contact member applied thereto to provide increased frictional resistance to relative movement when the surface 27 contacts the underside 50 of the lower flange section 3A of the supply reel 3. A ring portion 26 is secured to one side 24a of the reel receiving member 24 and is bent at a predetermined angle thereto. The ring portion 26 includes an aperture 25 for rotatably supporting the control member 23 on the support pin 22, as shown in Figure 5. In this manner, because of the predetermiend angle of the ring portion 26 with respect to the reel contacting plate 24, the reel contacting plate 24 extends upwardly at an angle when the control member 23 is mounted on the support pin 22. The control member 23 also includes a reel lock member 28 which extends perpendicularly from an edge of the reel contacting plate 24 adjacent to the ring portion 26 for preventing movement of the supply reel 3 in the rewind direction. In particular, a forward end 28a of the reel lock member 28 is arranged to be disengaged and engaged with the teeth 11 of the lower flange section 3A of the supply reel 3, as shown in Figures 8 and 9, respectively, for permitting movement of the supply reel 3 in the forward direction and preventing movement of the supply reel 3 in the rewind direction.

The reel lock release device 30, as shown in Figures 6A and 6B, includes a cylindrical portion 32 having a longitudinal bore 31 into which the support pin 22 is arranged to be inserted. In this manner, when the tape cassette 20 is assembled, the cylindrical portion 32 sits over the support pin 22 and on the ring portion 26 to prevent vertical movement of the ring portion 26 on the support pin 22. A first tongue or projection 33 extends tangentially from the outer periphery of the cylindrical portion 32 at the lower end 32a thereof for releasing the reel lock member 28 from the teeth 11 of the lower flange section 3A, to permit rotation of the supply reel 3 in the rewind direction. In particular, as shown in Figure 8, when the cylindrical portion 32, and thereby the tongue 33, is rotated in the direction of an arrow A' in Figure 8, one side 33a of the tongue 33 is brought into engagement with a side surface 28A of the reel lock member 28 and thereby biases the reel lock member 28 out of engagement with the teeth 11 of the lower flange section 3A to allow rotation of the supply reel 3 in the rewind direction. Accordingly, a second tongue or projection 34 extends tangentially from the outer periphery of the cylindrical portion 32 at an upper or middle end thereof and at right angles to the first tongue 33. In this manner, as will be described in greater detail hereinafter, when the tongue 34 is biased in the direction of the arrow A' in Figure 8, the tongue 33 and the cylindrical portion 32 are likewise biased in the same direction. It is to be appreciated that the tongues 33 and 34 and the cylindrical portion 32 can be formed as an integral moulded member, for example, of a synthetic resin.

In assembling the tape cassette 20, the control member 23 is positioned over the support pin 22 such that the upper surface 27 thereof is positioned below the underside 50 (Figure 7) of the lower flange section 3A. The reel lock release device 30 is then mounted on the support pin 22, as shown in Figure 5. It is to be appreciated that at this time the reel contacting plate 24 is inclined upwardly with respect to the ring portion 26. When the upper half 2B of the cassette housing 2 is assembled with the lower half 2a, the supply reel 3 is urged towards the lower half 2A of the cassette housing 2 by a reel biasing leaf spring 35 provided on the underside of the upper half 2B of the cassette housing 2, as shown in Figure 7. As a result, the reel contacting plate 24 is biased towards the bottom of the lower half 2A of the cassette housing 2 by the leaf spring 35, whereby the surface 27 of the reel contacting plate 24 is maintained in a resiliently biased contact state with the underside 50 of the lower flange section 3A. It is to be appreciated that the ring portion 26 of the control member 23 thereby tends to move upwardly along the support pin 22, raising the reel lock release device 30. This latter movement, however, is restricted by the engagement of the upper end 32b of the cylindrical portion 32 of the reel lock release device 30 with the underside of the upper half 2B of the cassette housing 2.

In operation, when the supply reel 3 is rotated in the normal forward or playback direction, shown by the arrow A of Figure 8, to supply the tape T, the reel contacting plate 24 which is in contact with the underside 50 of the lower flange section 3A of the supply reel 3 is rotated in the direction of the arrow A' in Figure 8 by the frictional force of contact. As a result, the reel lock member 28 of the control member 23 is rotated out of engagement with the teeth 11 at the periphery 3a of the lower flange section 3A, and the supply reel 3 can therefore be freely rotated in the normal forward direction. It is to be appreciated that during reproduction no undesirable mechanical noise, such as a clicking sound, is produced.

When the supply reel 3 is rotated in the direction of the arrow B in Figure 9, the frictional contact of the reel contact plate 24 with the underside 50 of the lower flange section 3A causes it to rotate in the direction of the arrow B' in Figure 9. As a result, the end 28a of the reel lock member 28 is rotated into engagement with the teeth 11 of the lower flange section 3A to lock the supply reel 3 against further rotation in the direction of the arrow B, that is, in the rewind direction.

It is to be appreciated that after the tape cassette 20 is returned to the lender, it must be rewound for operation by a subsequent user. Accordingly, in the front wall 7 of the cassette housing 2, a tool insertion aperture 40 is provided, as shown in Figures 8 to 10, for biasing the tongue 34 in the direction of arrow A' of Figure 8 thereby to rotate the reel lock member 28 out of engagement with the teeth 11 of the lower flange section 3A. For this purpose a reel lock release tool 41, as shown in Figures 11A and 11B, of a substantially L-shaped configuration is provided, and includes a piercing portion 42 which is arranged to be inserted into the aperture 40 such that the end 42a thereof engages with the tongue 34 for biasing the tongue 34 in the direction of the arrow A' of Figure 8. A recess 43 is provided at the attached end of the piercing portion 42 for locking the tool 41 into the aperture 40. In this manner, since the reel member 28 is biased out of engagement with the teeth 11 of the lower flange section 3a, the supply reel 3 can be rotated in the rewind direction to rewind the tape T for subsequent use. It is to be appreciated that, at the time that the tape cassette 20 is rented, the aperture 40 is concealed by the tape T. In addition, because the aperture 40 is located in the front wall 7 of the cassette housing 2, which is enclosed by a front cover (not shown), it becomes difficult for the user to see the aperture 40.

**Claims**

1. A tape cassette (20) comprising:
a rotatable supply reel (3) for supplying tape (T) and having flange means (3A, 3B);
a rotatable take-up reel (4) for taking up said tape (T); and

lock means (10) for preventing rotation of said supply reel (3) and said take-up reel (4) when said tape cassette (20) is not in use;
characterised by:
further lock means (21) for preventing rotation of said supply reel (3) in a first direction to take up said tape (T);
a pivot (22); and
plate means (24) secured to said further lock means (21) and pivotally mounted on said pivot (22);
said plate means (24) being in frictional engagement with said supply reel (3) for pivotally moving said further lock means (21) into locking contact with said flange means (3A) in response to rotation of said supply reel (3) in said first direction to take up said tape (T) and for pivotally moving said further lock means (21) completely out of contact with said flange means (3A) in response to rotation of said supply reel (3) in a second direction, opposite to said first direction, to supply said tape (T).

2. A tape cassette according to claim 1 wherein said plate means (24) includes a frictional contact surface in resiliently biased engagement with said supply reel (3).

3. A tape cassette according to claim 1 or claim 2 wherein said flange means (3A) includes at least one recess (11) and said further lock means (21) includes a reel lock member (28) arranged to engage in said at least one recess (11) for preventing rotaton of said supply reel (3) in said first direction to take up said tape (T).

4. A tape cassette according to claim 3 further including release means (30) for moving said reel lock member (28) out of engagement with said at least one recess (11), independent of rotation of said supply reel (3), to permit rotation of said supply reel (3) in said first direction to take up said tape (T).

5. A tape cassette according to claim 4 further including a housing (2) rotatably supporting said supply reel (3) and said take-up reel (4); and wherein said release means (30) includes pivotable means (32) pivotally mounted in said housing (2), and a first projection (33) secured to said pivotable means (32) for pivotally moving said reel lock member (28) out of engagement with said at least one recess (11), independent of rotation of said supply reel (3), to permit rotation of said supply reel (3) in said first direction to take up said tape (T).

6. A tape cassette according to claim 5 wherein said release means (30) includes a second projection (34) secured to said pivotable means (32); and said housing (2) includes an aperture (40) through which a tool (41) can be inserted into engagement with said second projection (34) to pivot said second projection (34), said pivotable means (32) and said first projection (33) so as pivotally to move said reel lock member (28) out of engagement with said at least one recess (11), independent of rotation of said supply reel (3), to permit rotation of said supply reel (3) in said first direction to take up said tape (T).

## Revendications

1. Cassette de bande magnétique (20), comprenant:
un rouleau débiteur rotatif (3) destiné à transmettre une bande magnétique (T) et ayant des flasques (3A, 3B),
un rouleau récepteur rotatif (4) destiné à recevoir la bande magnétique (T), et
un dispositif de blocage (10) destiné à empêcher la rotation du rouleau débiteur (3) et du rouleau récepteur (4) lorsque la cassette de bande magnétique (20) n'est pas utilisée,
caractérisée par:
un dispositif supplémentaire de blocage (21) destiné à empêcher la rotation du rouleau débiteur (3) dans un premier sens dans lequel il prélève la bande magnétique (T),
un pivot (22), et
un dispositif (24) à plaque fixé au dispositif supplémentaire de blocage (21) et monté de maniére qu'il puisse pivoter sur le pivot (22).
le dispositif à plaque (24) coopérant par frottement avec la rouleau débiteur (3) afin qu'il déplace par pivotement le dispositif supplémentaire de blocage (21) vers une position de contact avec blocage du flasque (3A) à la suite de la rotation du rouleau débiteur (3) dans le premier sens dans lequel il réenroule la bande magnétique (T), et à déplacer par pivotement le dispositif supplémentaire de blocage (21) en position totalement dégagée du flasque (3A) a la suite de la rotation du rouleau débiteur (3) dans un second sens opposé au premier, dans lequel il transmet la bande magnétique (T).

2. Cassette de bande selon la revendication 1, dans laquelle le dispositif à plaque (24) a une surface de contact par frottement qui coopère avec le rouleau débiteur (3) en étant repoussée élastiquement.

3. Cassette de bande selon l'une des revendications 1 et 2, dans laquelle le flasque (3A) a au moins une cavité (11), et le dispositif supplémentaire de blockage (21) a un organe de blocage de rouleau (28) destiné à coopérer avec cette cavité au moins (11) afin qu'il empêche la rotation du rouleau débiteur (3) dans le premier sens dans lequel il réenroule la bande magnétique (T).

4. Cassette de bande selon la revendication 3, comprenant en outre un dispositif de libération (30) destiné à déplacer l'organe de blocage de rouleau (28) hors de sa position de coopération avec une cavité au moins (11), indépendamment de la rotation du rouleau débiteur (3), afin que le rouleau débiteur (3) puisse tourner dans le premier sens et puisse réenrouler la bande magnétique (T).

5. Cassette de bande selon la revendication 4, comprenant en outre un boîtier (2) qui supporte le rouleau débiteur (3) et le rouleau récepteur (4) de manière qu'ils puissent tourner, et dans laquelle le dispositif de libération (30) comporte un dispositif pivotant (32) monté dans le boîtier (2) afin qu'il puisse pivoter et une première saillie (33) fixée au dispositif pivotant (32) et destinée à déplacer par pivotement l'organe de blocage de rouleau (28) en position séparée d'au moins une cavité (11), indépendamment de la rotation du rouleau débiteur (3) afin que le rouleau débiteur (3) puisse tourner dans le premier sens et puisse prélever la bande magnétique (T).

6. Cassette de bande selon la revendication 5, dans laquelle le dispositif de libération (30) comporte une seconde saillie (34) fixée au dispositif pivotant (32), et le boîtier (2) comprend une ouverture (40) par laquelle un outil (41) peut être introduit afin qu'il vienne au contact de la seconde saillie (34) et fasse pivoter la seconde saillie (34), le dispositif pivotant (32) et la première saillie (33), afin qu'il déplace par pivotement l'organe de blocage de rouleau (28) à distance d'au moins une cavité (11), indépendamment de la rotation du rouleau débiteur (3) et qu'il permette ainsi la rotation du rouleau débiteur (3) dans le premier sens dans lequel il réenroule la bande magnétique (T).

**Patentansprüche**

1. Bandkassette (20) mit
einer drehbaren Vorratsrolle (3) mit Seitenwänden (3A, 3B) zum Zuführen eines Bandes (T),
einer drehbaren Aufwickelrolle (4) zum Aufwickeln des Bandes (T) und
Sperrmitteln (10) zum Verhindern einer Drehung der Vorratsrolle (3) und der Aufwickelrolle (4), wenn die Bandkassette (20) nicht benutzt wird,
gekennzeichnet durch
ein weiteres Sperrmittel (21) zum Verhindern einer Drehung der Vorratsrolle (3) in einer ersten Richtung zum Aufwickeln des Bandes (T),
einen Schwenkbolzen (22) und
ein Plattenteil (24), das an dem weiteren Sperrmittel (21) befestigt ist und schwenkbar auf dem Schwenkbolzen (22) montiert ist,
wobei sich das Plattenteil (24) mit der Vorratsrolle (3) in Reibungsschluß befindet zum schwenkenden Bewegen des weiteren Sperrmittels (21) in eine sperrende Berührung mit der Seitenwand (3A) bei einer Drehung der Vorratsspule (3) in der ersten Richtung zum Aufwickeln des Bandes (T) und zum schwenkenden Bewegen des weiteren Sperrmittels (21) vollständig außer Berührung mit der Seitenwand (3A) bei einer Drehung der Vorratsrolle (3) in eine zweite Richtung, die der ersten Richtung entgegengesetzt ist, um das Band (T) zuzuführen.

2. Bandkassette nach Anspruch 1, bei der das Plattenteil (24) eine Reibungsberührungsfläche enthält, die in einem federnd vorgespannten Eingriff mit der Vorratsrolle (3) steht.

3. Bandkassette nach Anspruch 1 oder Anspruch 2, bei der die Seitenwand (3A) zumindest eine Ausnehmung (11) enthält und bei der das weitere Sperrmittel (21) ein Rollensperrteil (28) enthält, das so vorgesehen ist, daß es in die zumindest eine Ausnehmung (11) zum Verhindern einer Drehung der Vorratsrolle (3) in der ersten Richtung zum Aufwickeln des Bandes (T) eingreift.

4. Bandkassette nach Anspruch 3, die desweiteren ein Freigabemittel (30) zum Bewegen des Rollensperrteils (28) außer Eingriff mit der zumindest einen Ausnehmung (11) unabhängig von der Drehung der Vorratsrolle (3) enthält, um eine Drehung der Vorratsrolle (3) in der ersten Richtung zum Aufwickeln des Bandes (T) zu gestatten.

5. Bandkassette nach Anspruch 4, die desweiteren ein Gehäuse (2) enthält, das die Vorratsrolle (3) und die Aufwickelrolle (4) drehbar trägt, und in der das Freigabemittel (30) ein schwenkbares Teil (32), das schwenkbar in dem Gehäuse (2) montiert ist, und eine erste Nase (33) enthält, die an dem schwenkbaren Teil (32) zum schwenkenden Bewegen des Rollensperrteils (28) außer Eingriff mit der zumindest einen Ausnehmung (11) unabhängig von der Drehung der Vorratsrolle (3) befestigt ist, um eine Drehung der Vorratsrolle (3) in der ersten Richtung zum Aufwickeln des Bandes (T) zu gestatten.

6. Bandkassette nach Anspruch 5, bei der das Freigabemittel (30) eine zweite Nase (34) enthält, die an dem schwenkbaren Teil (32) befestigt ist, und bei der das Gehäuse (2) eine Öffnung (40) enthält, durch welche ein Werkzeug (41) eingeführt und in Eingriff mit der zweiten Nase (34) gebracht werden kann, um die zweite Nase (34), das schwenkbare Teil (32) und die erste Nase (33) zu schwenken, um so das Rollensperrteil (28) schwenkend außer Eingriff mit der zumindest einen Ausnehmung (11) unabhängig von der Drehung der Vorratsrolle (3) zu bewegen, um eine Drehung der Vorratsrolle (3) in der ersten Richtung zum Aufwickeln des Bandes (T) zu gestatten.

# FIG.1

0 064 859

**FIG.2**

0 064 859

# FIG.3

0 064 859

*FIG.4B*

*FIG.4A*

*FIG.4C*

*FIG.5*

**FIG.6A**

**FIG.6B**

**FIG.7**

**FIG.8**

5

# *FIG.9*

# *FIG.10*

# *FIG.11A*

# *FIG.11B*